# EUROPÄISCHE PATENTSCHRIFT

(11) **EP 3 519 695 B1**
(45) Veröffentlichungstag und Bekanntmachung des Hinweises auf die Patenterteilung: **15.07.2020**
(21) Anmeldenummer: 17764387.1
(22) Anmeldetag: 07.09.2017
(51) Int. Cl.: F04B 1/04, F04B 53/18

(54) **ROLLENSTÖSSEL FÜR EINE KOLBENPUMPE, KOLBENPUMPE**
ROLLER TAPPET FOR A PISTON PUMP, PISTON PUMP
POUSSOIR À GALET POUR UNE POMPE À PISTON ET POMPE À PISTON

(30) Priorität: 29.09.2016 DE 102016218909
(43) Veröffentlichungstag der Anmeldung: 07.08.2019
(73) Patentinhaber: Robert Bosch GmbH, 70442 Stuttgart (DE)
(72) Erfinder: MEIER, Gerhard, 73614 Schorndorf (DE); HOELLER, Martin, 70499 Stuttgart (DE); DUTT, Andreas, 70469 Stuttgart (DE); FRITZ, Florian, 71229 Leonberg (DE); MAJER, Markus, 73773 Aichwald (DE)
(86) Internationale Anmeldenummer: PCT/EP2017/072468
(87) Internationale Veröffentlichungsnummer: WO 2018/059900

(56) Entgegenhaltungen:
- DE-A1- 3 300 032
- DE-A1-102007 012 707
- DE-A1-102009 029 297
- DE-A1-102012 223 413

## Beschreibung

Die Erfindung betrifft einen Rollenstößel für eine Kolbenpumpe, insbesondere eine Kraftstoffhochdruckpumpe, mit den Merkmalen des Oberbegriffs des Anspruchs 1. Der Rollenstößel dient der Abstützung eines Pumpenkolbens der Kolbenpumpe an einem Nocken oder Exzenter einer Antriebswelle. Ferner betrifft die Erfindung eine Kolbenpumpe, insbesondere eine Kraftstoffhochdruckpumpe zur Versorgung eines Verbrennungsmotors mit Kraftstoff, mit einem solchen Rollenstößel.

### Stand der Technik

Ein Rollenstößel der vorstehend genannten Art geht beispielhaft aus der Offenlegungsschrift DE 33 00 032 A1 hervor. Der bekannte Rollenstößel dient zur Abstützung eines hubbeweglichen Pumpenkolbens an einem Nocken oder Exzenter einer Antriebswelle. Der Rollenstößel umfasst einen Stößelkörper mit einer stirnseitigen Ausnehmung und zwei Radialbohrungen, die sich an der Ausnehmung diametral gegenüberliegen und einen Bolzen aufnehmen, auf dem unmittelbar oder über eine Lagerbuchse eine Rolle drehbar gelagert ist. Zur Versorgung eines zwischen der Rolle und dem Bolzen ausgebildeten radialen Lagerspalts mit einem Schmiermedium ist mindestens eine radial oder schräg verlaufende Zulaufbohrung im Stößelkörper ausgebildet, die im Bereich eines axialen Lagerspalts zwischen der Rolle und dem Stößelkörper in die Ausnehmung mündet. Die Zulaufbohrung ist mit einem kreisbogenförmig verlaufenden Schmierkanal verbunden, der in einer den axialen Lagerspalt begrenzenden Fläche des Stößelkörpers ausgebildet ist. Die Herstellung des als Nut ausgebildeten Schmierkanals ist aufwendig.

Ausgehend von dem vorstehend zitierten Stand der Technik liegt der vorliegenden Erfindung die Aufgabe zugrunde, die Herstellung des Schmierkanals und damit des Stößelkörpers zu vereinfachen.

Zur Lösung der Aufgabe wird der Rollenstößel mit den Merkmalen des Anspruchs 1 angegeben. Vorteilhafte Weiterbildungen der Erfindung sind den Unteransprüchen zu entnehmen. Ferner wird eine Kolbenpumpe mit einem solchen Rollenstößel vorgeschlagen.

### Offenbarung der Erfindung

Der erfindungsgemäße Rollenstößel mit den Merkmalen des Anspruchs 1 hat den Vorteil, dass der Schmierkanal auf einfache Weise durch Anbringen einer die Radialbohrungen einfassenden Fase hergestellt ist. Dies gilt im Besonderen, da die Fläche, in welcher der Schmierkanal ausgebildet ist, innenliegend ist. Darüber hinaus kann über eine die Radialbohrung einfassende Fase eine weitere Anbindung des Schmierkanals an einen das Schmiermedium führenden Bereich geschaffen werden, so dass dem Schmierkanal und damit dem axialen Lagerspalt das Schmiermedium nicht ausschließlich über die Zulaufbohrung zugeführt wird.

Bevorzugt verläuft der Schmierkanal im Wesentlichen kreisbogenförmig um die Drehachse der Rolle. Das heißt, dass das Schmiermedium in Umfangsrichtung der Rolle verteilt wird. Vorteilhafterweise gibt es einen Überdeckungsbereich des Schmierkanals mit einem radialen Lagerspalt zwischen der Rolle und dem Bolzen bzw. zwischen der Rolle und der Lagerbuchse, so dass das Schmiermedium im Betrieb des Rollenstößels unmittelbar aus dem Schmierkanal in den radialen Lagerspalt eingezogen wird.

Des Weiteren bevorzugt ist in der den axialen Lagerspalt begrenzenden Fläche des Stößelkörpers eine die Zulaufbohrung erweiternde Ausnehmung ausgebildet, über welche die Zulaufbohrung mit dem Schmierkanal verbunden ist. Über die Ausnehmung ist insbesondere eine Verbindung der Zulaufbohrung mit dem Schmierkanal bei seitlich anlaufender Rolle sichergestellt, so dass der Zulauf des Schmiermediums nicht unterbrochen wird.

Ergänzend wird vorgeschlagen, dass sich der Schmierkanal entgegen der Drehrichtung der Rolle von der Zulaufbohrung bis zu einer Stirnfläche des Stößelkörpers erstreckt. In diesem Fall ist ebenfalls eine weitere Anbindung des Schmierkanals an einen das Schmiermedium führenden Bereich gegeben, so dass die Versorgung des axialen Lagerspalts mit Schmiermedium auch unter Seitenanlaufbedingungen sichergestellt ist. Erstreckt sich zudem der Schmierkanal entgegen der Drehrichtung der Rolle, kann die Drehbewegung der Rolle zur Verteilung des Schmiermediums im Schmierkanal bzw. im axialen Lagerspalt genutzt werden, so dass die Schmierung weiter optimiert wird.

Bevorzugt sind die sich an der stirnseitigen Ausnehmung des Stößelkörpers diametral gegenüberliegenden Radialbohrungen, in denen der Bolzen aufgenommen ist, zur Stirnfläche des Stößelkörpers hin geöffnet und der Bolzen ist in die Radialbohrungen eingeklippt. Die Klippverbindung des Bolzens erleichtert die Montage des Rollenstößels, so dass die Herstellung weiter vereinfacht wird. Ferner wird die Länge des Schmierkanals reduziert, wenn dieser bis zur Stirnfläche des Stößelkörpers geführt ist, um eine weitere Anbindung an einen das Schmiermedium führenden Bereich zu schaffen.

In Weiterbildung der Erfindung wird vorgeschlagen, dass der Schmierkanal in eine Schmiertasche mündet, die zwischen dem Stößelkörper und einer den axialen Lagerspalt begrenzenden Stirnfläche der Rolle ausgebildet ist. Über die Schmiertasche erfährt der Schmierkanal eine Erweiterung, so dass der Einzug von Schmiermedium in den Schmierkanal und damit in den axialen Lagerspalt verbessert wird.

Vorzugsweise wird die Schmiertasche durch eine Fase gebildet, über welche die den axialen Lagerspalt begrenzende Fläche des Stößelkörpers in die Stirnfläche des Stößelkörpers übergeht. In der Ausgestaltung als Fase ist die Schmiertasche besonders einfach herstellbar. Zudem kann der Einzug von Schmiermedium in den Schmierkanal bzw. in den axialen Lagerspalt über die Stirnfläche des Stößelkörpers verbessert werden.

Da ein Rollenstößel der vorstehend beschriebenen Art zwei axiale Lagerspalte ausbildet, wird vorgeschlagen, dass mindestens zwei Zulaufbohrungen zur Versorgung mit einem Schmiermedium im Stößelkörper vorgesehen sind, die im Bereich der axialen Lagerspalte in die stirnseitige Ausnehmung des Stößelkörpers münden. Vorteilhafterweise sind beide Zulaufbohrungen jeweils mit einem kreisbogenförmig verlaufenden Schmierkanal zur Verteilung des Schmiermediums verbunden. Weiterhin bevorzugt ist zudem jeder Schmierkanal über eine Schmiertasche an einen weiteren das Schmiermedium führenden Bereich angebunden, so dass die Versorgung mit dem Schmiermedium über mindestens zwei Positionen erfolgt, nämlich die Zulaufbohrung einerseits und die Schmiertasche andererseits.

Darüber hinaus wird eine Kolbenpumpe, insbesondere eine Kraftstoffhochdruckpumpe zur Kraftstoffversorgung eines Verbrennungsmotors, vorgeschlagen. Die Kolbenpumpe umfasst einen hubbeweglichen Pumpenkolben, der über einen erfindungsgemäßen Rollenstößel an einem Nocken oder Exzenter einer Antriebswelle abgestützt ist. Der Stößelkörper des Rollenstößels ist dabei in einer Zylinderbohrung eines Gehäuseteils der Kolbenpumpe hubbeweglich aufgenommen. Durch den Einsatz eines erfindungsgemäßen Rollenstößels kann der Verschleiß im Bereich des Triebwerks der Pumpe gemindert werden, so dass die Lebensdauer der Pumpe steigt.

Vorteilhafterweise ist die mindestens eine im Stößelkörper vorgesehene Zulaufbohrung, die der Versorgung des radialen Lagerspalts mit einem Schmiermedium dient, über die Zylinderbohrung des Gehäuseteils an eine motorinterne Druckölversorgungsleitung angeschlossen. Es muss demnach kein separates Schmiermedium vorgehalten werden. Der in der Druckölversorgungsleitung herrschende Druck fördert zudem die Zuführung des Schmiermediums in den Bereich der Rollenlager.

Eine bevorzugte Ausführungsform der Erfindung wird nachfolgend anhand der beigefügten Zeichnungen näher erläutert. Diese zeigen:
Fig. 1 einen schematischen Längsschnitt durch eine erfindungsgemäße Kolbenpumpe im Bereich des Rollenstößels,
Fig. 2 einen vergrößerte Ausschnitt der Fig. 1 im Bereich des axialen Lagerspalts,
Fig. 3 einen schematischen Längsschnitt durch den Rollenstößel der Fig. 1 außerhalb der in den axialen Lagerspalt mündenden Zulaufbohrung,
Fig. 4 eine schematische Seitenansicht des Rollenstößels der Fig. 1,
Fig. 5 eine perspektivische Darstellung des Stößelkörpers des Rollenstößels der Fig. 1 und

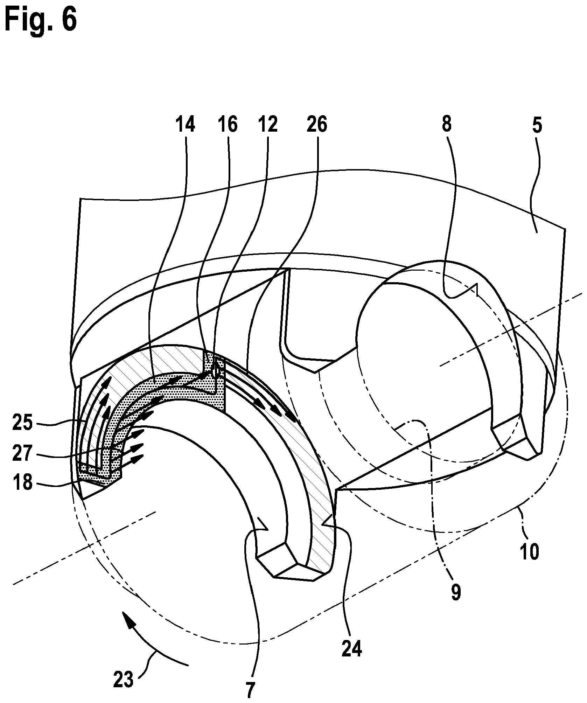

Fig. 6 eine weitere perspektivische Darstellung des Stößelkörpers des Rollenstößels der Fig. 1

### Ausführliche Beschreibung der Zeichnungen

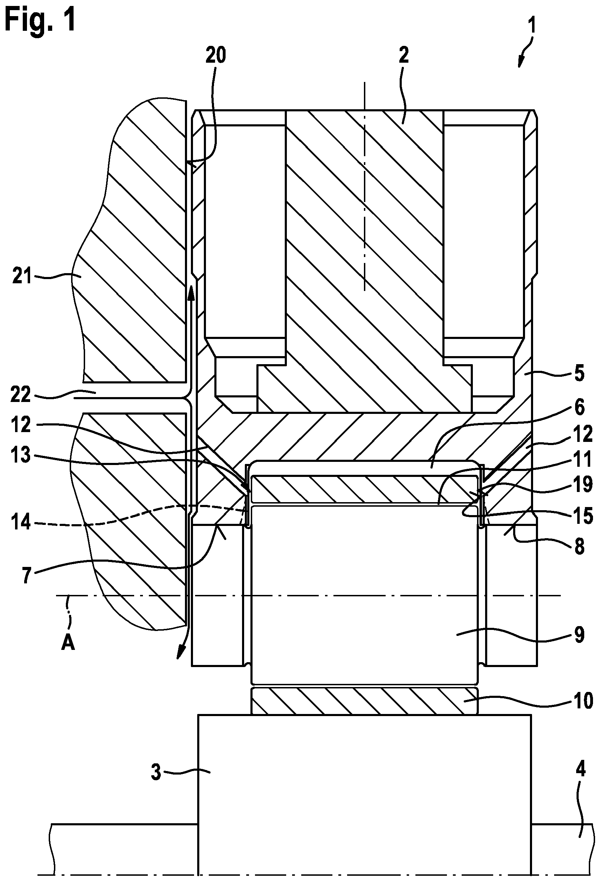

Der Fig. 1 ist eine erfindungsgemäße Kolbenpumpe mit einem Rollenstößel 1 zur Abstützung eines hubbeweglichen Pumpenkolbens 2 an einem Nocken 3 einer rotierenden Antriebswelle 4 zu entnehmen. Die Rotation der Antriebswelle 4 wird über den Rollenstößel 1 in eine Hubbewegung des Pumpenkolbens 2 umgewandelt. Der Rollenstößel 1 umfasst hierzu einen in einer Zylinderbohrung 20 eines Gehäuseteils 21 der Kolbenpumpe hubbeweglich aufgenommenen Stößelkörper 5 sowie eine außenumfangseitig am Nocken 3 ablaufende Rolle 10. Die Rolle 10 ist auf einem Bolzen 9 drehbar gelagert, der zur Verbindung mit dem Stößelkörper 5 in Radialbohrungen 7, 8 des Stößelkörpers 5 eingeklippt ist.

Zur Versorgung eines zwischen der Rolle 10 und dem Bolzen 9 ausgebildeten radialen Lagerspalts 11 mit einem Schmiermedium ist im Stößelkörper 5 eine Zulaufbohrung 12 vorgesehen, die sich von einer Außenumfangsfläche des Stößelkörpers 5 bis zu einer stirnseitigen Ausnehmung 6 des Stößelkörpers 5 erstreckt, in der die Rolle 10 aufgenommen ist. Über die Zylinderbohrung 20 ist die Zulaufbohrung 12 mit einer Druckölversorgungsleitung 22 verbunden, so dass Öl als Schmiermedium zugeführt wird.

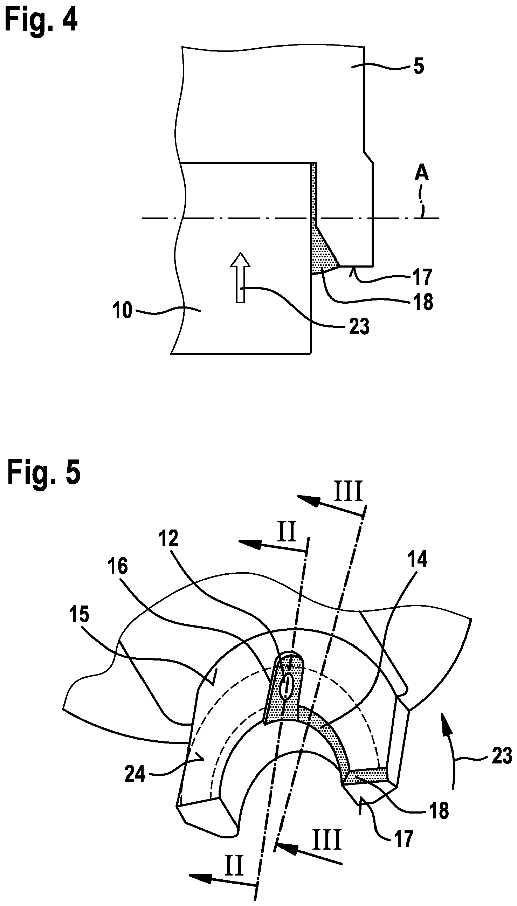

Die Zulaufbohrung 12 mündet im Bereich eines axialen Lagespalts 13, der von einer Stirnfläche 19 der Rolle 10 und einer Fläche 15 des Stößelkörpers 5 begrenzt wird, in die stirnseitige Ausnehmung 6 des Stößelkörpers 5. Der Mündungsbereich liegt in etwa dem radialen Lagerspalt 11 gegenüber, so dass dieser ebenfalls über die Zulaufbohrung 12 mit dem Schmiermedium versorgt wird. Allerdings kann es aufgrund von Fertigungs- und/oder Montagetoleranzen zu einer Schiefstellung des Nockens 3 gegenüber dem Rollenstößel 1 kommen, so dass eine Kraftkomponente auf die Rolle 10 wirkt, welche die Rolle 10 gegen die Fläche 15 des Stößelkörpers 5 drückt. Um zur verhindern, dass durch das seitliche Anlaufen der Rolle 10 der Zulauf von Schmiermedium unterbrochen wird, weist der Stößelkörper 5 des dargestellten Rollenstößels 1 einen kreisbogenförmig um die Drehachse A der Rolle 10 verlaufenden Schmierkanal 14 auf, der über eine Ausnehmung 16 mit der Zulaufbohrung 12 verbunden ist (siehe auch Fig. 5).

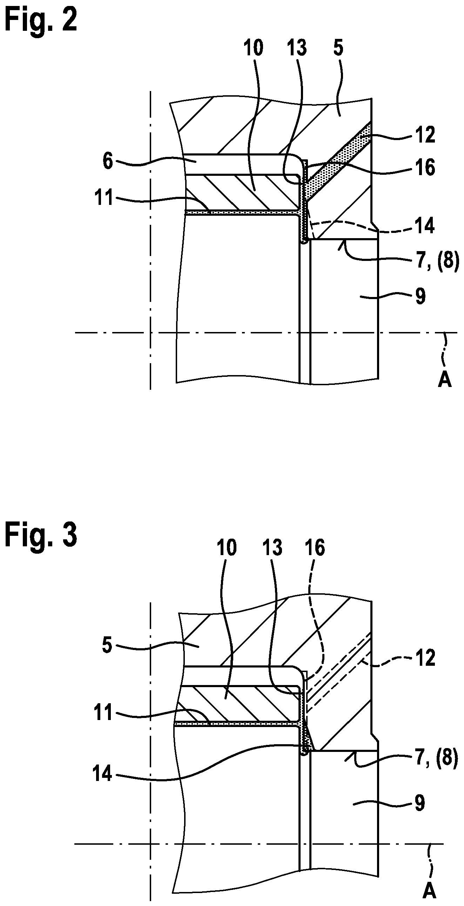

Wie insbesondere den Figuren 2 und 5 zu entnehmen ist, erstreckt sich die Ausnehmung 16 von einer radial außen liegenden Kreislinie, welche die seitliche Anlauffläche 24 begrenzt, bis zur Radialbohrung 7 bzw. 8. Auf diese Weise wird eine Verbindung der Zulaufbohrung 12 mit dem Schmierkanal 14 geschaffen, die selbst dann bestehen bleibt, wenn die Rolle 10 im Bereich der seitlichen Anlauffläche 24 gegen die Fläche 15 des Stößelkörpers 5 gedrückt wird.

Um die Herstellung des Schmierkanals 14 zu vereinfachen, ist dieser als eine die Radialbohrung 7 bzw. 8 einfassende Fase ausgebildet. Die Breite der Fase ist vorteilhafterweise derart gewählt, dass sich die Fase von der Radialbohrung 7 bzw. 8 bis zur seitlichen Anlauffläche 24 erstreckt, so dass der Einzug von Schmiermedium in den radialen Lagerspalt verbessert wird (siehe Fig. 3). In Umfangsrichtung erstreckt sich die Fase bis zu einer Stirnfläche 17 des Stößelkörpers 5, so dass hierüber eine weitere Anbindung des Schmierkanals 14 an einen das Schmiermedium führenden Bereich gegeben ist (siehe Fig. 5). Im Bereich der Stirnfläche 17 mündet der Schmierkanal 14 in eine Schmiertasche 18, die zwischen der Stirnfläche 19 der Rolle 10 und dem Stößelkörper 5 durch eine weitere Fase gebildet wird (siehe Fig. 4).

Im Betrieb der Kolbenpumpe läuft die Rolle 10 auf dem Nocken 3 der Antriebswelle 4 ab. Dabei dreht sich die Rolle 10 um eine Drehachse A. Um die Drehbewegung der Rolle 10 bei der Verteilung des Schmiermediums unterstützend einzusetzen, ist der Schmierkanal 14 von der Zulaufbohrung 12 bzw. von der die Zulaufbohrung 12 erweiternden Ausnehmung 16 entgegen der Drehrichtung 23 der Rolle 10 bis zur Stirnfläche 17 des Stößelkörpers 12 geführt. Dort vorhandenes Schmiermedium wird somit über die Schmiertasche 18 in den axialen Lagerspalt 13 eingezogen (siehe Pfeile 25). Über die Zulaufbohrung 12 und die Ausnehmung 16 in den axialen Lagerspalt 13 gelangendes Schmiermedium wird ebenfalls über die Drehbewegung der Rolle 10 gleichmäßig über die seitliche Anlauffläche 24 verteilt (siehe Pfeile 26). Zugleich wird Schmiermedium in den Schmierkanal 14 gedrückt, über den der radiale Lagerspalt 11 mit Schmiermedium versorgt wird (siehe Pfeile 27).

## Patentansprüche

1. Rollenstößel (1) für eine Kolbenpumpe, insbesondere für eine Kraftstoffhochdruckpumpe, zur Abstützung eines hubbeweglichen Pumpenkolbens (2) an einem Nocken (3) oder Exzenter einer Antriebswelle (4), umfassend einen Stößelkörper (5) mit einer stirnseitigen Ausnehmung (6) und zwei Radialbohrungen (7, 8), die sich an der Ausnehmung (6) diametral gegenüberliegen und einen Bolzen (9) aufnehmen, auf dem unmittelbar oder mittelbar über eine Lagerbuchse eine Rolle (10) drehbar gelagert ist, wobei zur Versorgung eines zwischen der Rolle (10) und dem Bolzen (9) bzw. zwischen der Rolle (10) und der Lagerbuchse ausgebildeten radialen Lagerspalts (11) mit einem Schmiermedium mindestens eine radial oder schräg verlaufende Zulaufbohrung (12) im Stößelkörper (5) ausgebildet ist, die im Bereich eines axialen Lagerspalts (13) zwischen der Rolle (10) und dem Stößelkörper (5) in die Ausnehmung (6) mündet, wobei die Zulaufbohrung (12) mit einem kreisbogenförmig verlaufenden Schmierkanal (14) verbunden ist, der in einer den axialen Lagerspalt (13) begrenzenden Fläche (15) des Stößelkörpers (5) ausgebildet ist,
**dadurch gekennzeichnet, dass** der Schmierkanal (14) durch eine die Radialbohrungen (7, 8) einfassende Fase gebildet wird.

2. Rollenstößel (1) nach Anspruch 1,
**dadurch gekennzeichnet, dass** der Schmierkanal (14) im Wesentlichen kreisbogenförmig um die Drehachse (A) der Rolle (10) verläuft.

3. Rollenstößel (1) nach Anspruch 1 oder 2,
**dadurch gekennzeichnet, dass** der Schmierkanal (14) den radialen Lagerspalt (11) zwischen der Rolle (10) und dem Bolzen (9) bzw. zwischen der Rolle (10) und der Lagerbuchse zumindest bereichsweise überdeckt.

4. Rollenstößel (1) nach einem der vorhergehenden Ansprüche,
**dadurch gekennzeichnet, dass** in der den axialen Lagerspalt (13) begrenzenden Fläche (15) des Stößelkörpers (5) eine die Zulaufbohrung (12) erweiternde Ausnehmung (16) ausgebildet ist, über welche die Zulaufbohrung (12) mit dem Schmierkanal (14) verbunden ist.

5. Rollenstößel (1) nach einem der vorhergehenden Ansprüche,
**dadurch gekennzeichnet, dass** sich der Schmierkanal (14) entgegen der Drehrichtung der Rolle (10) von der Zulaufbohrung (12) bis zu einer Stirnfläche (17) des Stößelkörpers (5) erstreckt.

6. Rollenstößel (1) nach Anspruch 5,
**dadurch gekennzeichnet, dass** die sich an der stirnseitigen Ausnehmung (6) des Stößelkörpers (5) diametral gegenüberliegenden Radialbohrungen (7, 8), in denen der Bolzen (9) aufgenommen ist, zur Stirnfläche (17) des Stößelkörpers (5) hin geöffnet sind und der Bolzen (9) in die Radialbohrungen (7, 8) eingeklippt ist.

7. Rollenstößel (1) nach einem der vorhergehenden Ansprüche,
**dadurch gekennzeichnet, dass** der Schmierkanal (14) in eine Schmiertasche (18) mündet, die zwischen dem Stößelkörper (5) und einer den axialen Lagerspalt (13) begrenzenden Stirnfläche (19) der Rolle (10) ausgebildet ist.

8. Rollenstößel (1) nach Anspruch 7,
**dadurch gekennzeichnet, dass** die Schmiertasche (18) durch eine Fase gebildet wird, über welche die den axialen Lagerspalt (13) begrenzende Fläche (15) des Stößelkörpers (5) in die Stirnfläche (17) des Stößelkörpers (5) übergeht.

9. Kolbenpumpe, insbesondere Kraftstoffhochdruckpumpe zur Kraftstoffversorgung eines Verbrennungsmotors, umfassend einen hubbeweglichen Pumpenkolben (2), der über einen Rollenstößel (1) nach einem der vorhergehenden Ansprüche an einem Nocken (3) oder Exzenter einer Antriebswelle (4) abgestützt ist, wobei der Stößelkörper (5) des Rollenstößels (1) in einer Zylinderbohrung (20) eines Gehäuseteils (21) der Kolbenpumpe hubbeweglich aufgenommen ist.

10. Kolbenpumpe nach Anspruch 9,
**dadurch gekennzeichnet, dass** die mindestens eine im Stößelkörper (5) vorgesehene Zulaufbohrung (12) über die Zylinderbohrung (20) an eine motorinterne Druckölversorgungsleitung (22) angeschlossen ist.

## Claims

1. Roller tappet (1) for a piston pump, in particular for a high-pressure fuel pump, for supporting a reciprocatingly movable pump (2) on a cam (3) or eccentric of a drive shaft (4), comprising a tappet body (5) with an end-side recess (6) and two radial bores (7, 8) which are situated diametrically opposite one another at the recess (6) and receive a pin (9) on which a roller (10) is rotatably mounted directly or indirectly via a bearing bush, wherein at least one radially or obliquely extending feed bore (12) is formed in the tappet body (5) for supplying a lubricating medium to a radial bearing gap (11) which is formed between the roller (10) and the pin (9) or between the roller (10) and the bearing bush, which feed bore opens into the recess (6) in the region of an axial bearing gap (13) between the roller (10) and the tappet body (5), wherein the feed bore (12) is connected to a lubricating duct (14) which extends in a circular arc shape and which is formed in a surface (15) of the tappet body (5) that delimits the axial bearing gap (13),
**characterized in that** the lubricating duct (14) is formed by a bevel bordering the radial bores (7, 8).

2. Roller tappet (1) according to Claim 1,
**characterized in that** the lubricating duct (14) extends around the axis of rotation (A) of the roller (10) in a substantially circular arc shape.

3. Roller tappet (1) according to Claim 1 or 2,
**characterized in that** the lubricating duct (14) covers the radial bearing gap (11) between the roller (10) and the pin (9) or between the roller (10) and the bearing bush at least in certain regions.

4. Roller tappet (1) according to one of the preceding claims,
**characterized in that** a recess (16) which widens the feed bore (12) and via which the feed bore (12) is connected to the lubricating duct (14) is formed in the surface (15) of the tappet body (5) that delimits the axial bearing gap (13).

5. Roller tappet (1) according to one of the preceding claims,
**characterized in that** the lubricating duct (14) extends counter to the direction of rotation of the roller (10) from the feed bore (12) to an end face (17) of the tappet body (5).

6. Roller tappet (1) according to Claim 5,
**characterized in that** the radial bores (7, 8) which are situated diametrically opposite one another at the end-side recess (6) of the tappet body (5) and in which the pin (9) is received are open towards the end face (17) of the tappet body (5), and the pin (9) is clipped into the radial bores (7, 8).

7. Roller tappet (1) according to one of the preceding claims,
**characterized in that** the lubricating duct (14) opens into a lubricating pocket (18) which is formed between the tappet body (5) and an end face (19) of the roller (10) that delimits the axial bearing gap (13).

8. Roller tappet (1) according to Claim 7,
**characterized in that** the lubricating pocket (18) is formed by a bevel via which the surface (15) of the tappet body (5) that delimits the axial bearing gap (13) merges into the end face (17) of the tappet body (5) .

9. Piston pump, in particular a high-pressure fuel pump for supplying fuel to an internal combustion engine, comprising a reciprocatingly movable pump piston (2) which is supported via a roller tappet (1) according to one of the preceding claims on a cam (3) or eccentric of a drive shaft (4), wherein the tappet body (5) of the roller tappet (1) is received in a reciprocatingly movable manner in a cylinder bore (20) of a housing part (21) of the piston pump.

10. Piston pump according to Claim 9,
**characterized in that** the at least one feed bore (12) which is provided in the tappet body (5) is connected to a pressurized-oil supply line (22) within the engine via the cylinder bore (20).

## Revendications

1. Poussoir à galet (1) pour une pompe à piston, en particulier pour une pompe à carburant haute pression, pour supporter un piston de pompe (2) à mouvement de va-et-vient sur une came (3) ou un excentrique d'un arbre d'entraînement (4), comportant un corps de poussoir (5) doté d'un évidement frontal (6) et de deux alésages radiaux (7, 8) qui sont diamétralement opposés au niveau de l'évidement (6) et reçoivent un axe (9) sur lequel un galet (10) est monté rotatif directement ou indirectement par le biais d'une douille de palier, dans lequel, pour l'alimentation en agent lubrifiant d'un interstice de palier radial (11) formé entre le galet (10) et l'axe (9) ou entre le galet (10) et la douille de palier, au moins un alésage d'alimentation (12) s'étendant radialement ou de manière inclinée est formé dans le corps de poussoir (5), lequel alésage débouche dans l'évidement (6) dans la région d'un interstice de palier axial (13) entre le galet (10) et le corps de poussoir (5), dans lequel l'alésage d'alimentation (12) est relié à un canal de lubrification (14) s'étendant en forme d'arc de cercle, lequel canal est formé dans une surface (15) du corps de poussoir (5) limitant l'interstice de palier axial (13), **caractérisé en ce que** le canal de lubrification (14) est formé par un biseau bordant les alésages radiaux (7, 8).

2. Poussoir à galet (1) selon la revendication 1, **caractérisé en ce que** le canal de lubrification (14) s'étend sensiblement en forme d'arc de cercle autour de l'axe de rotation (A) du galet (10).

3. Poussoir à galet (1) selon la revendication 1 ou 2, **caractérisé en ce que** le canal de lubrification (14) recouvre au moins dans certaines régions l'interstice de palier radial (11) entre le galet (10) et l'axe (9) ou entre le galet (10) et la douille de palier.

4. Poussoir à galet (1) selon l'une des revendications précédentes,
**caractérisé en ce qu'**un évidement (16) élargissant l'alésage d'alimentation (12) est formé dans la surface (15) du corps de poussoir (5) limitant l'interstice de palier axial (13), évidement par le biais duquel l'alésage d'alimentation (12) est relié au canal de lubrification (14).

5. Poussoir à galet (1) selon l'une des revendications précédentes,
**caractérisé en ce que** le canal de lubrification (14) s'étend en sens inverse au sens de rotation du galet (10) à partir de l'alésage d'alimentation (12) jusqu'à une surface frontale (17) du corps de poussoir (5).

6. Poussoir à galet (1) selon la revendication 5,
**caractérisé en ce que** les alésages radiaux (7, 8) diamétralement opposés au niveau de l'évidement frontal (6) du corps de poussoir (5), dans lesquels l'axe (9) est reçu, sont ouverts en direction de la surface frontale (17) du corps de poussoir (5) et l'axe (9) est enclipsé dans les alésages radiaux (7, 8).

7. Poussoir à galet (1) selon l'une des revendications précédentes,
**caractérisé en ce que** le canal de lubrification (14) débouche dans une cavité de lubrification (18) qui est formée entre le corps de poussoir (5) et une surface frontale (19) du galet (10) limitant l'interstice de palier axial (13).

8. Poussoir à galet (1) selon la revendication 7,
**caractérisé en ce que** la cavité de lubrification (18) est formée par un biseau par le biais duquel la surface (15) du corps de poussoir (5) limitant l'interstice de palier axial (13) se prolonge par la surface frontale (17) du corps de poussoir (5).

9. Pompe à piston, en particulier pompe à carburant haute pression pour l'alimentation en carburant d'un moteur à combustion interne, comportant un piston de pompe (2) à mouvement de va-et-vient, qui est supporté par le biais d'un poussoir à galet (1) selon l'une des revendications précédentes sur une came (3) ou un excentrique d'un arbre d'entraînement (4), dans laquelle le corps (5) du poussoir à galet (1) est reçu dans un alésage cylindrique (20) d'une partie de carter (21) de la pompe à piston de manière à pouvoir effectuer un mouvement de va-et-vient.

10. Pompe à piston selon la revendication 9,
**caractérisée en ce que** l'au moins un alésage d'alimentation (12) prévu dans le corps de poussoir (5) est raccordé à une conduite d'alimentation en huile sous pression (22) interne au moteur par le biais de l'alésage cylindrique (20).
